# EUROPÄISCHE PATENTANMELDUNG

(11) **EP 2 017 075 A1**
(43) Veröffentlichungstag der Anmeldung: **21.01.2009**
(21) Anmeldenummer: 07112852.4
(22) Anmeldetag: 20.07.2007
(51) Int. Cl.: B32B 27/20, B32B 27/28, B32B 33/00, E04C 2/20, C08J 9/00, C08J 9/36

(54) **Dämmplatte und Verfahren zu ihrer Herstellung**

(71) Anmelder: Sika Technology AG, 6340 Baar (CH)
(72) Erfinder: Schaub, Andy, 6362 Stansstad (CH); Achermann, Bernhard, 5064 Kerns (CH); Kiser, Ernst, 6060 Sarnen (CH)
(74) Vertreter: Sika Patent Attorneys

(57) **Zusammenfassung**

Bei einer Dämmplatte zur Isolierung, insbesondere von Fassaden, Dächern, Wänden und Decken von Gebäuden, umfasst diese expandierten Polystyrol (EPS) mit einem Zusatz von athermanen Stoffen.

Zumindest Teile der nach aussen weisenden Oberfläche der Wärmedämmplatte sind mit einer die Wärmestrahlung zumindest teilweise reflektierenden Beschichtung versehen. Die reflektierende Beschichtung enthält einen reflektierenden Stoff.

## Beschreibung

### Technisches Gebiet

Die Erfindung geht aus von einer Dämmplatte nach dem Oberbegriff des ersten Anspruches.

Die Erfindung geht ebenfalls aus von einem Verfahren zur Herstellung einer Dämmplatte nach dem Oberbegriff des unabhängigen Verfahrensanspruches.

### Stand der Technik

Dämmmaterialien auf Basis von expandierbarem Polystyrol (EPS) sind seit langer Zeit bekannt und haben sich aufgrund ihrer Wärmeformbeständigkeit und ihrer vergleichsweise geringen Wärmeleitfähigkeit für verschiedene Anwendungen wie der Wärmedämmung von Gebäuden bewährt. Üblicherweise werden die Dämmmaterialien in Form von im wesentlichen quaderförmigen Platten je nach den örtlichen Gegebenheiten und dem Anwendungszweck auf der Aussen oder Innenseite der zu isolierenden Gebäudewand angebracht und anschliessend mit Putz, insbesondere Grundputz, beschichtet.

Die Wärmedämmung von aufgeschäumtem Polystyrol beruht auf seinem Aufbau aus einer Vielzahl an Polystyrolzellen, in denen Luft, die eine geringe Wärmeleitfähigkeit aufweist, fein verteilt ist, wobei diese Luft in den Zellen verbleibt, so dass die Dämmwirkung über die Zeit konstant bleibt. Es ist bekannt, dass die Wärmeleitfähigkeit von Polystyrolschaum im Wesentlichen von der Rohdichte des fertigen Polystyrol-Hartschaums abhängt, wobei mit zunehmender Rohdichte die Wärmeleitfähigkeit abnimmt bzw. die Wärmedämmung zunimmt. Allerdings weist die Wärmeleitfähigkeit von Polystyrolschaum zwischen 30 und 50 kg/m³ ein Minimum auf, so dass eine darüber hinausgehende Erhöhung der Rohdichte nicht zu einer weiteren Senkung, sondern vielmehr zu einem Anstieg der Wärmeleitfähigkeit führt.

Eine Verringerung der Strahlungsdurchlässigkeit und damit eine Verbesserung der Wärmedämmung konnte lange Zeit nur durch Erhöhung der Rohdichte erreicht werden. Um die Wärmeleitfähigkeitswerte von expandiertem Polystyrol-Hartschaum bei gegebener Raumdichte zu verringern, ist bereits vorgeschlagen worden, den Materialien athermane (auch adiathermane) Stoffe, d.h. Wärmeabsorbierende, insbesondere Infrarotstrahlung absorbierende, Verbindungen zuzufügen. So sind aus der EP 0 620 246 B1 Formkörper aus Polystyrol-Partikelschaum mit einer Rohdichte von weniger als 20 kg/m³ bekannt, welche bevorzugt 0,5 bis 5 Gew.-% eines athermanen Materials, vorzugsweise ein Metalloxid, Nichtmetalloxid, Russ, Graphit und/oder Aluminiumpulver, enthalten. Zur Herstellung dieser Formkörper wird dem noch nicht aufgeschäumten Polystyrolgranulat das athermane Material als Additiv zugegeben oder das athermane Material wird auf die vorgeschäumten Polystyrolschaum-Partikel aufgebracht, bevor diese zu Formkörpern verschweisst werden. Weitere Verfahren zur Herstellung solcher Materialien sind in der EP 1 142 942 A2 und der EP 1 159 338 B1 beschrieben. Durch die athermanen, d.h. Strahlung absorbierende, Zusätze ist die Farbe des entsprechenden Granulats und damit auch der aufgeschäumten Perlen mehrheitlich grau, da sichtbares Licht auch absorbiert wird. Der graue Polystyrol-Hartschaum weist eine wesentlich geringere Wärmeleitfähigkeit als weisser Polystyrolschaum gleicher Rohdichte auf, so dass bei grauem Polystyrol-Hartschaum mit weniger Rohstoffeinsatz und damit geringerer Dicke die gleiche Dämmleistung erzielt werden kann wie mit weissem Polystyrol-Hartschaum.

Ein Nachteil des grauen Materials ist jedoch, dass die zur Zeit auf dem Markt verwendeten grauen Dämmplatten aus expandierbarem Polystyrol, nachfolgend kurz EPS-Dämmplatten genannt, bei Sonneneinstrahlung starke Veränderungen in der Längenausdehnung zeigen. Der Grund hierfür liegt in der Aufheizung der grauen Oberfläche auf ca. 50°C bis 80°C, je nach Rohstoff. Dieser Aufheizeffekt bewirkt ein Aufwölben der Dämmplatten, was zum Ablösen der Platten vom Untergrund oder zu einer Wölbung der Fassadenfläche führen kann. Aus diesem Grund müssen die zu isolierenden Fassaden während des Anbringens der grauen EPS-Dämmplatten bis nach deren Verputzen grossflächig mit Planen abgehängt und beschattet, oder zumindest mechanisch fixiert werden.

In der DE 82 26 114 U ist eine kombinierte Wärmedämmplatte vorgeschlagen worden, bei der die äussere Schutzschicht aus einem anorganischen Fasermaterial besteht, um die eigentliche Dämmplatte gegen Wärmestrahlen zu schützen. Eine solche Dämmplatte ist jedoch nicht dazu geeignet, als Teil eines Wärmedämmverbundsystems zur Isolierung von Hausfassaden zu dienen.

Aus der WO 2006/056387 A1 ist eine kombinierte Wärmedämmplatte bekannt, welche aus grauem expandiertem Polystyrol (EPS) und einer aussenliegenden dünneren Schicht aus einem Kunststoff-Hartschaum, vorteilhafterweise einer weissen EPS Schicht besteht. Solche Platten werden jedoch nur durch Punktverschweissungen verbunden und es kann zu Problemen mit der Haftung der beiden Platten aufeinander kommen.

### Darstellung der Erfindung

Der Erfindung liegt die Aufgabe zugrunde, bei einer Dämmplatte der eingangs genannten Art eine Dämmplatte zur Verfügung zu stellen, die eine hohe Wärmedämmleistung erzielt, sich aber bei Sonneneinstrahlung nicht verformt oder ablöst.

Erfindungsgemäss wird dies durch die Merkmale des ersten Anspruches erreicht.

Kern der Erfindung ist es also, dass zumindest Teile der nach aussen weisenden Oberfläche der Wärmedämmplatte mit einer die Wärmestrahlung zumindest teilweise reflektierenden Beschichtung versehen sind, und dass die reflektierende Beschichtung einen reflektierenden Stoff enthält.

Die Vorteile der Erfindung sind unter anderem darin zu sehen, dass durch die Verbindung einer EPS-Dämmplatte geringer Wärmeleitfähigkeit mit athermanen Zusätzen mit einer Strahlung reflektierenden äusseren Beschichtung sich die guten Wärmedämmeigenschaften der grauen EPS-Dämmplatte mit einem günstigen Temperaturverhalten bedingt durch die Beschichtung vereinen lassen. Aufgrund der reflektierenden Aussenseite bleibt die erfindungsgemässe Wärmedämmplatte auch bei hohen Temperaturen und bei direkter Sonnenbestrahlung formstabil und ist problemlos zu verarbeiten. Ein Schüsseln oder Schrumpfen findet nicht statt. Auch kann das aufwändige Abhängen und Beschatten der montierten Dämmplatten entfallen. Ein weiterer Vorteil ist, dass sich durch die Beschichtung ein Überschleifen der Oberfläche der Platte erübrigt, welches bei herkömmlichen Platten nötig ist. Durch die Beschichtung der Wärmedämmplatte wird diese Wärmedämmplatte zudem vor Lichtstrahlung, insbesondere UV Strahlung, geschützt, so dass die Platten nicht vergilben.

Weiter vorteilhaft ist es, dass die Beschichtung als Haftvermittler wirkt und somit aufzutragende Putze, insbesondere Grundputz, hervorragend auf der Beschichtung haften. Weiter ist die Beschichtung vorteilhafterweise dampfdiffusionsoffen, so dass die Wärmedämmplatte bezüglich ihrer Dampfdiffusionseigenschaften unverändert bleibt.

Weitere vorteilhafte Ausgestaltungen der Erfindung ergeben sich aus den Unteransprüchen.

### Wege zur Ausführung der Erfindung

Die hier verwendeten EPS-Dämmplatten enthalten athermane Zusätze, unter dem Begriff atherman werden dabei solche Materialien verstanden, welche Wärme und zwar insbesondere Infrarotstrahlung absorbieren. Das athermane Material der grauen EPS-Dämmplatte ist zweckmässigerweise aus der aus Kohlenstoff, z.B. Graphit oder Russ, Metallpulver, z.B. Aluminiumpulver, Metalloxiden, z.B. Eisen(III)oxid oder Aluminiumoxid, Nichtmetalloxiden, z.B. Siliziumdioxid, organische Farbstoffe und Kombinationen hieraus bestehenden Gruppe ausgewählt. Die Einarbeitung des athermanen Materials in das Polystyrol kann auf jede dem Fachmann bekannte Weise, z.B. mit einem der in den EP 0 620 246 B1, EP 1 142 942 A2 oder EP 1 159 338 B1, die hiermit als Referenz eingeführt und als Teil der Offenbarung gelten, beschriebenen Verfahren, erfolgen.

Zur Erzielung einer optimalen Wärmedämmung weist die graue innere EPS Dämmplatte vorzugsweise eine Dicke grösser 20 mm, insbesondere eine Dicke zwischen 50 mm und 400 mm auf.

Als Beschichtung der Dämmplatte wird nun eine dünne Schicht aufgetragen, welche so ausgeformt ist, dass sie Strahlung, insbesondere Wärmestrahlung, reflektiert. Das Reflexionsvermögen R der Beschichtung geht dabei vorzugsweise gegen 1, das Absorbtionsvermögen A gegen 0, wobei nach dem Energiesatz gilt: A(T) + R(T) = 1. Vorzugsweise sollte die verwendete Schicht ein Reflexionsvermögen grösser 0.5, bevorzugt grösser 0.7, besonders bevorzugt grösser 0.8 haben.

Die Beschichtung enthält dazu einen Stoff der Licht-Strahlung, insbesondere infrarotes Licht reflektiert, vorzugsweise ein Pigment, insbesondere ein mineralisches Pigment und / oder Titandioxid TiO₂.

Bevorzugte IR-reflektierende Pigmente weisen Abmessungen im Bereich von etwa 1 bis 50 µm oder Hohlkugeln mit denselben Abmessungen auf. Besonders bevorzugt ist es, Pigmente mit hoher Reflexionskraft im Wellenlängenbereich zwischen 8 und 14 µm zu verwenden.

Als Beispiele für geeignete Infrarot-reflektierende Pigmente seien Metalle und Metall-Legierungen genannt, insbesondere Aluminium, Chrom, Eisen, Kupfer, Nickel, Silber, Gold, Eisen, Zinn, Zink, Bronze, Messing, Eisenlegierungen und Nickellegierungen. Auch Metallsulfide können verwendet werden, insbesondere Kupfer-, Blei- und Zinksulfid, des weiteren Metallfluoride, insbesondere Calciumfluorid, Bariumfluorid und Natriumfluorid, und Metalloxide, insbesondere Zinkoxid, Titandioxid, Magnesiumdioxid oder Antimondioxid. Dielektrische Pigmente sind z. B. keramische oder glasartige Pigmente.

Die Menge an Pigment im Beschichtungsmaterial liegt vorteilhafterweise bei mindestens 5 Gew.-%, bezogen auf alle Bestandteile des Beschichtungsmaterials mit Ausnahme von Wasser und ggf. weiterem Lösemittel; vorteilhaft werden bis zu 60 Gew.-% gewählt, und ganz besonders bevorzugt 15-50 Gew.-%.

Die Pigmente selbst können in geeigneter Weise beschichtet oder an der Oberfläche derivatisiert sein. Wenn die Oberfläche Hydroxigruppen aufweist, können die Pigmente beispielsweise in das Netzwerk eingebunden werden, wodurch vermieden wird, dass sie sich bei längerem Stehen absetzen könnten.

Besonders vorteilhaft wird die Beschichtung auch so ausgelegt, dass Sie eine Haftbrücke für die weitere Beschichtung, insbesondere für den Auftrag von Verputz, bildet. Die Beschichtung verkrallt sich auf der Plattenoberfläche in den Hohlräumen, auch Zwickel genannt, und ergibt dadurch eine optimale Haftbrücke für den weiteren Aufbau. Als Haftbrücke dient im wesentlichen das Bindemittel der Beschichtung.

Die Beschichtung wird vorzugsweise flüssig auf die Oberfläche der Dämmplatte aufgetragen, insbesondere mittels eines Sprühgerätes, mit einem Pinsel oder einem Roller. Die Schichtdicke liegt dabei bei ungefähr 1 mm, bevorzugt bei weniger als 1 mm, insbesondere 0.5 bis 0.1 mm.

Die Beschichtung wird üblicherweise nach dem Herstellen der Platte aufgetragen. Die Beschichtung wird vorzugsweise vor dem Tempern der Wärmedämmplatte aufgetragen. Das Tempern solcher Platten ist an sich bekannt und dient dazu, dass die Platten sich später nicht in ihren Dimensionen verändern. Durch das Auftragen der Beschichtung vor dem Tempern trocknet diese besser ab und es ergibt sich eine bessere Beständigkeit der Beschichtung.

Die Beschichtung ist dabei vorzugsweise dampfdiffusionsoffen, so dass die Dämmplatte bezüglich ihrer Dampfdiffusionseigenschaften unverändert bleibt. Auch wird durch die Beschichtung die Dämmplatte vor Lichtstrahlung, insbesondere Ultravioletter Strahlung geschützt, so dass die Platte nicht vergilbt.

Bevorzugt werden als Beschichtung Dispersionsfarben verwendet. Als Dispersionsfarben oder -anstriche bezeichnet man flüssige, insbesondere zähflüssige Anstriche die aus einer chemischen Dispersion, meistens einer Emulsion, aus Binde- und Lösungsmitteln, Farbmitteln, meistens Pigmenten, und Zusatzstoffen bestehen.

Kunstharzdispersionsanstriche, auch Kunststoffdispersionsanstriche, oder - farben, oder einfach -dispersionen, sind Anstriche, die in der Regel aus einer Dispersion aus Kunstharz und Wasser bestehen. Hauptbestandteile sind typischerweise Wasser als Lösungsmittel, aus Mineralöl gewonnene Kunstharze oder ähnliche Kunststoffe als Bindemittel, Farbstoffe oder Pigmente wie Titandioxid, Füllstoffe wie Calciumcarbonat, Silikate und Quarzmehl. Zusätzlich kommen Hilfsstoffe, sogenannte Additive, zum Einsatz, die zur Verbesserung der technischen Eigenschaften eingesetzt werden, wie Stabilisatoren, Entschäumer, Verdickungsmittel, Konservierungsmittel, Lösungsmittel usw. Bei den verwendeten Kunstharzen handelt es sich z. B. um Acrylate, insbesondere Copolymere aus Styrol und Acrylsäureester; Polyvinylacetate, Kautschuke; usw.. Kunstharzdispersionsfarben für den Innenbereich sind in der DIN EN 13300 normiert, solche für den Außenbereich in der DIN EN 1062.

Kunstharzdispersionswandfarben mit besonders hoher Wasserfestigkeit, für den Außen- und Fassadenbereich sowie für Feuchtbereiche im Hausinneren, weisen einen erhöhten Anteil an Kunstharz auf.

Als reflektierender Stoff wird vorteilhafterweise Titandioxid oder ein mineralisches Pigment verwendet, aber es können auch andere Stoffe verwendet werden.

### Ausführungsbeispiel:

Eine graue EPS-Dämmplatte enthält als athermanes Material Graphit. Eine solche Platte mit einer Dicke von 80 mm wurde an einer nach Süden ausgerichteten Fassade mittels eines Klebers befestigt und bei Sonnenschein die Temperatur an der Oberfläche der Dämmplatte gemessen. Es wurde eine maximale Temperatur von 78°C gemessen. Die Dämmplatte verformte sich und löste sich teilweise von der Fassade.

An der gleichen Fassade wurde eine identische Platte wie vorher beschrieben angebracht, deren nach aussen gerichtete Oberfläche aber mit einer weissen Dispersionsfarbe, mit TiO₂ als reflektierendem Stoff, beschichtet wurde. Bei der gleichen Sonneneinstrahlung wurde eine maximale Oberflächen-Temperatur von 38°C gemessen. Es wurden keine Verformungen oder Ablösungen festgestellt.

Selbstverständlich ist die Erfindung nicht auf das gezeigte und beschriebene Ausführungsbeispiel beschränkt. Solche erfindungsgemässen Dämmplatten können überall verwendet werden, z.B. an Fassaden, Dächern, Wänden, Böden und Decken von Gebäuden.

## Patentansprüche

1. Dämmplatte zur Isolierung, insbesondere von Fassaden, Dächern, Wänden, Böden und Decken von Gebäuden, umfassend expandierten Polystyrol (EPS) mit einem Zusatz von athermanen Stoffen,
**dadurch gekennzeichnet,**
**dass** zumindest Teile der nach aussen weisenden Oberfläche der Wärmedämmplatte mit einer die Wärmestrahlung zumindest teilweise reflektierenden Beschichtung versehen sind, und dass die reflektierende Beschichtung einen reflektierenden Stoff enthält.

2. Dämmplatte nach Anspruch 1,
**dadurch gekennzeichnet,**
**dass** das Reflexionsvermögen der Beschichtung grösser 0.5, bevorzugt grösser 0.7, insbesondere grösser 0.8 ist.

3. Dämmplatte nach Anspruch 1 oder 2,
**dadurch gekennzeichnet,**
**dass** reflektierende Stoff ein Pigment ist, insbesondere ein mineralisches Pigment und / oder TiO₂.

4. Dämmplatte nach einem der vorhergehenden Ansprüche,
**dadurch gekennzeichnet,**
**dass** ein Bindemittel der Beschichtung ein Kunstharz ist, insbesondere ein Acrylat, Copolymere aus Styrol und Acrylsäureester; Polyvinylacetat; Kautschuk umfasst.

5. Dämmplatte nach Anspruch 4,
**dadurch gekennzeichnet,**
**dass** das Kunstharz ein Acrylat, insbesondere ein Copolymere aus Styrol und Acrylsäureester; und / oder ein Polyvinylacetat; und / oder ein Kautschuk umfasst.

6. Dämmplatte nach einem der vorhergehenden Ansprüche,
**dadurch gekennzeichnet,**
**dass** die Beschichtung eine Haftbrücke ist.

7. Dämmplatte nach einem der vorhergehenden Ansprüche,
**dadurch gekennzeichnet,**
**dass** die Beschichtung dampfdiffusionsoffen ist.

8. Dämmplatte nach einem der vorhergehenden Ansprüche,
**dadurch gekennzeichnet,**
**dass** die Beschichtung UV Strahlung reflektiert.

9. Dämmplatte nach einem der vorhergehenden Ansprüche,
**dadurch gekennzeichnet,**
**dass** die Beschichtung vollflächig mit der Dämmplatte verbunden ist.

10. Dämmplatte nach einem der vorhergehenden Ansprüche,
**dadurch gekennzeichnet,**
**dass** das athermane Material der EPS-Dämmplatte aus der aus Kohlenstoff, bevorzugt Graphit oder Russ; Metallpulver, bevorzugt Aluminiumpulver; Metalloxiden, bevorzugt Eisen(III)oxid oder Aluminiumoxid; Nichtmetalloxiden, bevorzugt Siliziumdioxid; Farbstoffen; und Kombinationen hieraus bestehenden Gruppe ausgewählt ist.

11. Dämmplatte nach einem der vorhergehenden Ansprüche,
**dadurch gekennzeichnet,**
**dass** die Beschichtung eine Dispersion ist.

12. Verfahren zur Herstellung einer Dämmplatte zur Isolierung, insbesondere von Fassaden, Dächern, Wänden, Böden und Decken von Gebäuden, umfassend expandierten Polystyrol (EPS) mit einem Zusatz von athermanen Stoffen,
**dadurch gekennzeichnet,**
**dass** in einem ersten Schritt eine aus expandiertem Polystyrol (EPS) mit einem Zusatz von athermanen Stoffen bestehende Platte hergestellt wird, dass dann zumindest Teile der Oberfläche der Wärmedämmplatte mit einer die Wärmestrahlung zumindest teilweise reflektierenden Beschichtung versehen werden, und dass die reflektierende Beschichtung einen reflektierenden Stoff enthält.

13. Verfahren nach Anspruch 12,
**dadurch gekennzeichnet,**
**dass** die Beschichtung mittels sprühen, pinseln oder rollen aufgebracht wird.

14. Verfahren nach Anspruch 12 oder 13,
**dadurch gekennzeichnet,**
**dass** die Beschichtung vor dem Tempern der Dämmplatte auf die Platte aufgebracht wird.
